# EUROPÄISCHE PATENTSCHRIFT

(11) **EP 3 390 173 B1**
(45) Veröffentlichungstag und Bekanntmachung des Hinweises auf die Patenterteilung: **25.09.2019**
(21) Anmeldenummer: 16809322.7
(22) Anmeldetag: 02.12.2016
(51) Int. Cl.: B60S 1/40

(54) **WISCHERVORRICHTUNG**
WIPER DEVICE
DISPOSITIF D'ESSUIE-GLACE

(30) Priorität: 18.12.2015 DE 102015225889
(43) Veröffentlichungstag der Anmeldung: 24.10.2018
(73) Patentinhaber: Robert Bosch GmbH, 70442 Stuttgart (DE)
(72) Erfinder: DEPONDT, Helmut, 3370 Boutersem (BE)
(86) Internationale Anmeldenummer: PCT/EP2016/079530
(87) Internationale Veröffentlichungsnummer: WO 2017/102371

(56) Entgegenhaltungen:
- WO-A1-2004/098962
- DE-A1-102013 019 805

## Beschreibung

### Stand der Technik

Es ist bereits eine Wischervorrichtung mit einer Wischblattadaptereinheit vorgeschlagen worden, welche ein erstes Wischblattadapterelement und ein zweites Wischblattadapterelement aufweist. Das zweite Wischblattadapterelement ist in einem montierten Zustand schwenkbar an dem ersten Wischblattadapterelement befestigt und umgreift das erste Wischblattadapterelement teilweise. In dem montierten Zustand ist das erste Wischblattadapterelement an einem Wischblattbauteil eines Wischblatts befestigt. Das zweite Wischblattadapterelement ist in dem montierten Zustand mit einem Wischarmadapter gekoppelt. Eine Demontage des Wischarmadapters von Wischblattadapter erfolgt in einer Betriebsstellung. Zu der Demontage wird der Wischarmadapter in der Betriebsstellung in einer parallel zu einer zu wischenden Scheibe ausgerichteten Horizontalrichtung relativ zu dem Wischblattadapter, insbesondere relativ zu dem ersten Wischblattadapterelement und zu dem zweiten Wischblattadapterelement, bewegt.

Eine Wischervorrichtung mit den Merkmale des Oberbegriffs ist aus der DE 10 2013 019 805 A1 bekannt. Außerdem ist eine weitere Wischervorrichtung aus der WO 2004/098962 A1 bekannt.

### Offenbarung der Erfindung

Die Erfindung geht aus von einer Wischervorrichtung mit einem Wischblattadapter, welcher zumindest ein erstes Wischblattadapterelement, das insbesondere zu einer Verbindung, insbesondere zu einer direkten und/oder indirekten Verbindung, mit zumindest einem Wischblattbauteil, insbesondere zumindest einer Federschiene, vorgesehen ist, und zumindest ein zweites Wischblattadapterelement aufweist, welches in wenigstens einem montierten Zustand schwenkbar relativ zu dem ersten Wischblattadapterelement gelagert ist und welches insbesondere in dem montierten Zustand das erste Wischblattadapterelement wenigstens teilweise umgreift, und mit einem Wischarmadapter, welcher in dem montierten Zustand mit dem zweiten Wischblattadapterelement gekoppelt ist.

Es wird vorgeschlagen, dass der Wischblattadapter eine Sicherungseinheit aufweist, welche dazu vorgesehen ist, eine Demontage des Wischarmadapters von dem Wischblattadapter ausschließlich in zumindest einer Demontageschwenkstellung des Wischarmadapters relativ zu dem ersten Wischblattadapterelement zuzulassen. Unter einer "Wischervorrichtung" soll insbesondere zumindest ein Teil, insbesondere eine Unterbaugruppe, eines Wischers verstanden werden, wobei insbesondere zusätzlich auch Zubehöreinheiten für den Wischer umfasst sein können, wie beispielsweise eine Sprüheinheit und/oder ein Waschwasserkanal. Insbesondere kann die Wischervorrichtung auch den gesamten Wischer umfassen. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Das Wischblattbauteil könnte beispielsweise eine Federschiene und/oder eine Spoilereinheit und/oder eine Endkappeneinheit und/oder eine Wischleisteneinheit sein. Unter einem "Wischblattadapterelement" soll insbesondere ein Bauteil eines Wischblattadapters verstanden werden, welches insbesondere in wenigstens einem demontierten Zustand relativ zu einem weiteren Bauteil des Wischblattadapters beweglich, insbesondere frei beweglich, ist. Das erste Wischblattadapterelement ist insbesondere zu einer Kopplung mit dem Wischblattbauteil vorgesehen und weist insbesondere zumindest einen Kopplungsbereich zu einer Kopplung mit dem Wischblattbauteil auf. Insbesondere ist das erste Wischblattadapterelement dazu vorgesehen, in dem montierten Zustand unverlierbar mit dem Wischblattbauteil gekoppelt zu sein. Beispielsweise könnte das erste Wischblattadapterelement zu einer Kopplung mit dem Wischblattbauteil über eine Schweißverbindung und/oder über eine Ultraschallschweißverbindung und/oder über eine Rastverbindung vorgesehen sein. Das erste Wischblattadapterelement weist insbesondere zumindest einen Lagerbolzen auf, welcher zu einer schwenkbaren Lagerung des zweiten Wischblattadapterelements an dem ersten Wischblattadapterelement vorgesehen ist. Das zweite Wischblattadapterelement ist insbesondere dazu vorgesehen, in dem montierten Zustand unverlierbar mit dem ersten Wischblattadapterelement gekoppelt zu sein. In dem montierten Zustand ist das zweite Wischblattadapterelement insbesondere schwenkbar an dem Lagerbolzen des ersten Wischblattadapterelements gekoppelt und/oder angeordnet und insbesondere um eine durch den Lagerbolzen verlaufende Schwenkachse relativ zu dem ersten Wischblattadapterelement schwenkbar gelagert. Das erste Wischblattadapterelement ist in dem montierten Zustand wenigstens teilweise innerhalb des zweiten Wischblattadapterelements angeordnet und/oder wenigstens teilweise von dem zweiten Wischblattadapterelement umgriffen und/oder umgeben. Unter einem "Wischarmadapter" soll in diesem Zusammenhang insbesondere ein Adapter verstanden werden, der einen Kontaktbereich zu einem Wischarmbauteil aufweist und mit dem Wischarmbauteil unverlierbar verbunden und dazu vorgesehen ist, einen Kopplungsbereich des Wischarmbauteils für eine Kopplung und/oder Kontaktierung mit einem Wischblattadapter, insbesondere mit einem Wischblattadapterelement des Wischblattadapters, bereitzustellen. Das zweite Wischblattadapterelement ist in dem montierten Zustand insbesondere mit dem Wischarmadapter gekoppelt. Insbesondere ist der Wischarmadapter in dem montierten Zustand drehfest an dem zweiten Wischblattadapterelement gekoppelt und insbesondere durch die drehfeste Kopplung des Wischarmadapters an dem zweiten Wischblattadapterelement schwenkbar relativ zu dem ersten Wischblattadapterelement gelagert. Unter einer "Sicherungseinheit" soll insbesondere eine Einheit verstanden werden, welche dazu vorgesehen ist, eine insbesondere ungewollte Demontage des Wischarmadapters von dem Wischblattadapter wenigstens im Wesentlichen zu verhindern und/oder eine Demontage des Wischarmadapters von dem Wischblattadapter ausschließlich in zumindest einer Demontageschwenkstellung des Wischarmadapters relativ zu dem ersten Wischblattadapterelement zu ermöglichen und vorteilhaft in von der Demontageschwenkstellung verschiedenen Schwenkstellungen des Wischarmadapters relativ zu dem ersten Wischblattadapterelement wenigstens im Wesentlichen zu blockieren und/oder zu verhindern. Unter einer "Schwenkstellung" eines Objekts, insbesondere des zweiten Wischblattadapterelements und/oder des Wischarmadapters, relativ zu dem ersten Wischblattadapterelement soll insbesondere eine relative Lage und/oder Position des Objekts relativ zu dem ersten Wischblattadapterelement verstanden werden, welche durch zumindest einen minimalen Winkel einer Haupterstreckungsrichtung des Objekts relativ zu einer Grundfläche des ersten Wischblattadapterelements definiert ist. In der Demontageschwenkstellung die die Haupterstreckungsrichtung des zweiten Wischblattadapterelements und/oder des Wischarmadapters schräg relativ zu der Grundfläche ausgerichtet und schließt mit der Grundfläche insbesondere einen minimalen Winkel größer 0° und kleiner 90°, insbesondere größer 4° und kleiner 86°, ein. Unter einer "Haupterstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch umschließt. Das erste Wischblattadapterelement weist insbesondere zumindest einen Grundkörper auf, welcher die Grundfläche definiert und an welchem insbesondere der Lagerbolzen angeordnet ist. Die Grundfläche ist insbesondere eine Oberfläche des ersten Wischblattadapterelements, welche in wenigstens einer Betriebsstellung wenigstens im Wesentlichen parallel zu einer zu wischenden Scheibe ausgerichtet ist. Unter einer "Betriebsstellung" soll insbesondere eine Schwenkstellung des zweiten Wischblattadapterelements und des an das zweite Wischblattadapterelement gekoppelten Wischarmadapters relativ zu dem ersten Wischblattadapterelement verstanden werden, in welcher eine Wischleiste insbesondere zu Reinigungszwecken über eine zu wischende Scheibe bewegbar ist. In der Betriebsstellung befindet sich die Wischervorrichtung und insbesondere ein die Wischervorrichtung umfassender Wischer in einem betriebsbereiten Zustand. Insbesondere unterscheidet sich die Demontageschwenkstellung von der Betriebsstellung. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Wischervorrichtung kann vorteilhaft eine hohe Sicherheit bereitgestellt werden. Insbesondere kann eine ungewollte und/oder versehentliche Demontage des Wischarmadapters von dem Wischblattadapter wenigstens im Wesentlichen verhindert werden.

Gemäß der Erfindung weist das erste Wischblattadapterelement zumindest ein Blockierungselement auf, welches in dem montierten Zustand wenigstens teilweise durch das zweite Wischblattadapterelement, insbesondere durch eine Ausnehmung des zweiten Wischblattadapterelements, hindurchgreift und welches dazu vorgesehen ist, in wenigstens einer Betriebsstellung des Wischarmadapters relativ zu dem ersten Wischblattadapterelement eine Demontage des Wischarmadapters von dem Wischblattadapter zumindest in einer Richtung, insbesondere in zumindest einer Horizontalrichtung, und insbesondere eine Bewegung des Wischarmadapters relativ zu dem Wischblattadapter in der Richtung, insbesondere in der Horizontalrichtung, zu blockieren. Das Blockierungselement ist insbesondere an dem Grundkörper des ersten Wischblattadapterelements angeordnet. Insbesondere weist das Blockierungselement eine Haupterstreckungsrichtung auf, welche wenigstens im Wesentlichen senkrecht zu der Grundfläche ausgerichtet ist. Das Blockierungselement ragt insbesondere über die Grundfläche hinaus. Insbesondere ist das Blockierungselement Teil der Sicherungseinheit, welches insbesondere teilweise durch das erste Wischblattadapterelement gebildet ist. Insbesondere ist die Sicherungseinheit wenigstens teilweise durch das erste Wischblattadapterelement gebildet. Insbesondere weist der Wischarmadapter zumindest ein Anschlagselement auf, welches dazu vorgesehen ist, bei einem Versuch einer Demontage des Wischarmadapters von dem Wischblattadapter in der Richtung an dem Blockierungselement anzuschlagen. Insbesondere ist die Richtung als eine Horizontalrichtung ausgebildet. Die Richtung, insbesondere die Horizontalrichtung, ist insbesondere wenigstens im Wesentlichen parallel zu der Grundfläche des ersten Wischblattadapterelements und/oder zu der zu wischenden Scheibe ausgerichtet. Dadurch kann insbesondere eine Demontage des Wischarmadapters von dem Wischblattadapter in der Betriebsstellung und damit verbunden in einem Betriebszustand insbesondere eine ungewollte und/oder versehentliche Demontage, beispielsweise durch in einem Betriebszustand auftretende Bewegungen, verhindert werden.

In der Demontageschwenkstellung ist der Wischarmadapter insbesondere relativ zu dem Blockierungselement verschwenkt. Vorzugsweise ist der Wischarmadapter in der Demontageschwenkstellung in einer Demontageposition relativ zu dem zweiten Wischblattadapterelement und ausgehend von der Demontageposition wenigstens abschnittsweise beweglich, insbesondere verschiebbar, relativ zu dem zweiten Wischblattadapterelement angeordnet. Insbesondere ist der Wischarmadapter in der Demontageschwenkstellung ausgehend von der Demontageposition um eine Strecke von mindestens 3 mm, insbesondere von mindestens 4 mm, vorteilhaft von mindestens 5 mm und vorzugsweise von mindestens 6 mm beweglich relativ zu dem zweiten Wischblattadapterelement angeordnet. Dadurch kann insbesondere eine Demontage des Wischarmadapters von dem Wischblattadapter zumindest eingeleitet und/oder eine hohe Flexibilität bereitgestellt werden.

Weiterhin wird vorgeschlagen, dass das Blockierungselement zumindest eine Führungsfläche aufweist, welche in der Demontageschwenkstellung zu einer Führung des Wischarmadapters, insbesondere des Anschlagselements des Wischarmadapters, relativ zu dem zweiten Wischblattadapterelement insbesondere bei einer Bewegung des Wischarmadapters von der Demontageposition in eine weitere Demontageposition vorgesehen ist. Insbesondere gleitet der Wischarmadapter bei der Bewegung des Wischarmadapters relativ zu dem zweiten Wischblattadapterelement über die Führungsfläche und/oder in Kontakt mit der Führungsfläche. Insbesondere ist die Führungsfläche schräg relativ zu der Grundfläche ausgerichtet und insbesondere als eine der Grundfläche abgewandte Oberfläche des Blockierungselements ausgebildet. Das Blockierungselement und insbesondere die Führungsfläche ist/sind vorzugsweise dazu vorgesehen, eine Bewegung des Wischarmadapters relativ zu dem ersten Wischblattadapterelement zurück in die Betriebsstellung zumindest in der weiteren Demontageposition und insbesondere zusätzlich in Positionen der Bewegung des Wischarmadapters relativ zu dem zweiten Wischblattadapterelement, in welchen der Wischarmadapter oberhalb der Führungsfläche und/oder in Kontakt mit der Führungsfläche angeordnet ist, wenigstens im Wesentlichen zu blockieren und/oder zu verhindern. Dadurch kann insbesondere eine besonders vorteilhafte Bewegung des Wischarmadapters relativ zu dem zweiten Wischblattadapterelement erzielt werden.

Beispielsweise könnte der Wischarmadapter in der Demontageschwenkstellung ausgehend von der Demontageposition durch die Bewegung, insbesondere durch die Verschiebung, relativ zu dem zweiten Wischblattadapterelement von dem zweiten Wischblattadapterelement und damit von dem Wischblattadapter demontiert werden. Vorzugsweise weist das zweite Wischblattadapterelement zumindest ein Begrenzungselement auf, welches dazu vorgesehen ist, eine in der Demontageschwenkstellung erfolgende Bewegung des Wischarmadapters relativ zu dem zweiten Wischblattadapterelement zu begrenzen und insbesondere durch diese Begrenzung die weitere Demontageposition festzulegen. Insbesondere ist die Sicherungseinheit wenigstens teilweise durch das zweite Wischblattadapterelement gebildet. Insbesondere schlägt das Anschlagselement des Wischarmadapters bei einem Versuch einer Fortführung der Bewegung des Wischarmadapters relativ zu dem zweiten Wischblattadapterelement an dem Begrenzungselement an. Die Bewegung des Wischarmadapters relativ zu dem zweiten Wischblattadapterelement ist insbesondere auf die Grundfläche zugerichtet und insbesondere wenigstens im Wesentlichen parallel zu der Führungsfläche ausgerichtet. Dadurch kann insbesondere eine hohe Sicherheit und/oder ein mehrstufiges Demontageverfahren ermöglicht werden.

Zudem wird vorgeschlagen, dass das zweite Wischblattadapterelement zumindest eine Demontagekulissenführung aufweist, welche in der Demontageschwenkstellung insbesondere ausgehend von der weiteren Demontageposition wenigstens abschnittsweise zu einer Führung zumindest eines Anschlagelements des Wischarmadapters vorgesehen ist. Unter einer "Kulissenführung" soll in diesem Zusammenhang insbesondere eine Kulissenbahn verstanden werden, in welcher zumindest ein Anschlagselement eines Wischarmadapters in zumindest einer Ebene zwangsgeführt ist. Eine Übertragungsfunktion der Kulissenführung wird ausschließlich durch den Verlauf der Kulissenbahn bestimmt. Bevorzugt ist die Kulissenbahn von einer Nut gebildet. Insbesondere erfolgt die Demontage des Wischarmadapters von dem Wischblattadapter durch eine Bewegung des Anschlagelements in einer Demontagerichtung relativ zu dem zweiten Wischblattadapterelement. Die Demontagerichtung ist insbesondere wenigstens im Wesentlichen senkrecht zu der Führungsfläche ausgerichtet. Die Demontagekulissenführung ist insbesondere von dem zweiten Wischblattadapterelement definiert und/oder gebildet und weist insbesondere zumindest eine Kulissenführungsgrundfläche auf. Unter einer "Kulissenführungsgrundfläche" soll in diesem Zusammenhang insbesondere eine Fläche einer Kulissenführung verstanden werden, die von Seitenwänden, die zu einer seitlichen Zwangsführung einer Kulisse vorgesehen sind, begrenzt ist. Dadurch kann insbesondere eine optimale Bewegungsrichtung des Wischarmadapters relativ zu dem zweiten Wischblattadapterelement vorgegeben und/oder ein hoher Komfort erzielt werden.

Der Wischarmadapter könnte in der Demontageschwenkstellung beispielsweise einen minimalen Winkel von maximal 50°, insbesondere von maximal 40°, vorteilhaft von maximal 30° und vorzugsweise von maximal 25° relativ zu der Grundfläche des ersten Wischblattadapterelements annehmen. Vorzugsweise nimmt der Wischarmadapter in der Demontageschwenkstellung einen minimalen Winkel von mindestens 5°, insbesondere von mindestens 7°, vorteilhaft von mindestens 9° und vorzugsweise von mindestens 10° relativ zu einer Grundfläche des ersten Wischblattadapterelements an. Dadurch kann insbesondere eine besonders hohe Sicherheit erreicht werden.

Ferner wird vorgeschlagen, dass die Wischervorrichtung zumindest eine Montagekulissenführung aufweist, welche wenigstens teilweise von dem zweiten Wischblattadapterelement gebildet ist und welche insbesondere im Fall einer Montage des Wischarmadapters an dem zweiten Wischblattadapterelement wenigstens abschnittsweise zu einer Führung zumindest eines Anschlagelements des Wischarmadapters vorgesehen ist. Insbesondere ist eine Montage des Wischarmadapters an dem zweiten Wischblattadapterelement unabhängig von einer Schwenkstellung des zweiten Wischblattadapterelements relativ zu dem ersten Wischblattadapterelement durchführbar. Insbesondere ist die Montage des Wischarmadapters an dem zweiten Wischblattadapterelement in der Demontageschwenkstellung und in der Betriebsstellung des zweiten Wischblattadapterelements relativ zu dem ersten Wischblattadapterelement durchführbar. Dadurch kann insbesondere eine Fehlmontage vermieden und/oder eine einfache Montage des Wischarmadapters an dem zweiten Wischblattadapterelement erzielt werden.

Beispielsweise könnte die Montagekulissenführung wenigstens zu einem Großteil, beispielsweise wenigstens im Wesentlichen und insbesondere vollständig von dem zweiten Wischblattadapterelement gebildet sein. Vorteilhaft ist die Montagekulissenführung wenigstens teilweise von dem ersten Wischblattadapterelement, insbesondere von dem Blockierungselement und vorteilhaft von einer seitlichen Begrenzung des Blockierungselements, gebildet. Vorzugsweise ist das Blockierungselement insbesondere im Fall einer Montage des Wischarmadapters an dem zweiten Wischblattadapterelement wenigstens abschnittsweise zu einer Führung zumindest eines Anschlagelements des Wischarmadapters vorgesehen. Insbesondere weist das zweite Wischblattadapterelement zumindest ein Kulissenführungsbegrenzungselement auf, welches insbesondere die Montagekulissenführung wenigstens teilweise begrenzt und insbesondere eine seitliche die Montagekulissenführung wenigstens teilweise begrenzende Wandung ausbildet. Vorteilhaft sind das Kulissenführungsbegrenzungselement und das Blockierungselement zumindest in der Betriebsstellung wenigstens im Wesentlichen bündig angeordnet. Dadurch kann das Blockierungselement insbesondere mehrere Funktionen übernehmen, wodurch insbesondere geringe Kosten erreicht und/oder auf weitere Elemente, welche insbesondere zu einer Erfüllung einer Begrenzungsfunktion für die Montagekulissenführung vorgesehen sein könnten, verzichtet werden kann.

Die Montagekulissenführung und die Demontagekulissenführung könnten beispielsweise beabstandet und/oder voneinander getrennt angeordnet sein. Vorteilhaft sind die Montagekulissenführung und die Demontagekulissenführung benachbart angeordnet. Vorzugsweise weist das zweite Wischblattadapterelement zumindest ein Kulissenführungsbegrenzungselement auf, welches dazu vorgesehen ist, die Montagekulissenführung und die Demontagekulissenführung wenigstens teilweise insbesondere seitlich zu begrenzen. Vorteilhaft sind die Montagekulissenführung und die Demontagekulissenführung wenigstens im Wesentlichen parallel angeordnet. Dadurch kann insbesondere eine kompakte und/oder preisgünstige und/oder materialsparende Ausgestaltung ermöglicht werden.

Eine besonders hohe Sicherheit kann erreicht werden durch einen Wischer mit zumindest einer erfindungsgemäßen Wischervorrichtung.

Im Fall eines Wischblattadapters für eine erfindungsgemäße Wischervorrichtung, welcher insbesondere speziell für die erfindungsgemäße Wischervorrichtung vorgesehen und/oder ausgebildet ist, kann die Sicherheit noch weiter gesteigert werden.

Eine besonders sichere Demontage des Wischarmadapters von dem Wischblattadapter kann erreicht werden durch ein Verfahren zu einer Demontage einer erfindungsgemäßen Wischervorrichtung, mit einem Wischblattadapter, welcher zumindest ein erstes Wischblattadapterelement und zumindest ein zweites Wischblattadapterelement aufweist, welches in wenigstens einem montierten Zustand schwenkbar relativ zu dem ersten Wischblattadapterelement gelagert ist, und mit einem Wischarmadapter, welcher in dem montierten Zustand mit dem zweiten Wischblattadapterelement gekoppelt ist, wobei eine Demontage des Wischarmadapters von dem Wischblattadapter ausschließlich in zumindest einer Demontageschwenkstellung des Wischarmadapters relativ zu dem ersten Wischblattadapterelement zugelassen wird.

Die erfindungsgemäße Wischervorrichtung soll hierbei nicht auf die oben beschriebene Anwendung und Ausführungsform beschränkt sein. Insbesondere kann die erfindungsgemäße Wischervorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Wischer mit einer erfindungsgemäßen Wischervorrichtung in einer schematischen perspektivischen Darstellung,
- Fig. 2: ein zweites Wischblattadapterelement eines Wischblattadapters der Wischervorrichtung in einer schematischen perspektivischen Darstellung,
- Fig. 3: ein erstes Wischblattadapterelement des Wischblattadapters in einer schematischen perspektivischen Darstellung,
- Fig. 4: den Wischblattadapter und einen Wischarmadapter der Wischervorrichtung in einer ersten Montagestellung in einer schematischen perspektivischen Darstellung,
- Fig. 5: den Wischblattadapter und einen Teil des Wischarmadapters in einer zweiten Montagestellung in einer schematischen perspektivischen Darstellung,
- Fig. 6: den Wischblattadapter und den Wischarmadapter, welcher teilweise transparent dargestellt ist, in einem montierten Zustand in einer schematischen perspektivischen Darstellung,
- Fig. 7: den Wischblattadapter und den Wischarmadapter in dem montierten Zustand in einer schematischen perspektivischen Darstellung,
- Fig. 8: den Wischblattadapter und den Wischarmadapter, welcher teilweise transparent dargestellt ist, in dem montierten Zustand in einer schematischen Darstellung von oben,
- Fig. 9: den Wischblattadapter und den Wischarmadapter in einer Demontageschwenkstellung des Wischblattadapters relativ zu dem ersten Wischblattadapterelement in einer schematischen perspektivischen Darstellung,
- Fig. 10: den Wischblattadapter und den Wischarmadapter, welcher teilweise transparent dargestellt ist, in der Demontageschwenkstellung in einer Demontageposition des Wischblattadapters relativ zu dem zweiten Wischblattadapterelement in einer schematischen perspektivischen Darstellung,
- Fig. 11: den Wischblattadapter und den Wischarmadapter, welcher teilweise transparent dargestellt ist, in der Demontageschwenkstellung in einer weiteren Demontageposition des Wischblattadapters relativ zu dem zweiten Wischblattadapterelement in einer schematischen perspektivischen Darstellung,
- Fig. 12: den Wischblattadapter und den Wischarmadapter in der Demontageschwenkstellung in der weiteren Demontageposition in einer schematischen perspektivischen Darstellung,
- Fig. 13: den Wischblattadapter und den Wischarmadapter, welcher teilweise transparent dargestellt ist, in der Demontageschwenkstellung in einer ersten Position des Wischblattadapters relativ zu dem zweiten Wischblattadapterelement in einer schematischen perspektivischen Darstellung,
- Fig. 14: den Wischblattadapter und den Wischarmadapter, welcher teilweise transparent dargestellt ist, in der Demontageschwenkstellung in einer zweiten Position des Wischblattadapters relativ zu dem zweiten Wischblattadapterelement in einer schematischen perspektivischen Darstellung und
- Fig. 15: den Wischblattadapter und den Wischarmadapter in der Demontageschwenkstellung in der zweiten Position in einer schematischen perspektivischen Darstellung.

### Beschreibung des Ausführungsbeispiels

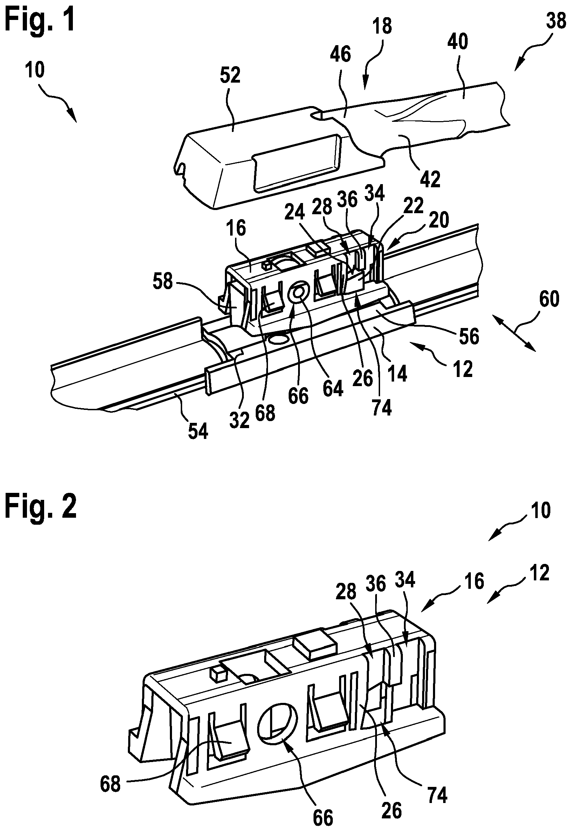

Fig. 1 zeigt einen Wischer 38 mit einer Wischervorrichtung 10. Die Wischervorrichtung 10 weist ein Wischblatt 54 auf. Das Wischblatt 54 weist zumindest eine Federschiene (nicht dargestellt) auf. Das Wischblatt 54 weist eine Wischleiste auf, welche in einer Betriebsstellung in einem Kontakt mit einer zu wischenden Scheibe (nicht dargestellt) angeordnet ist. In einem montierten Zustand sind die Federschiene und die Wischleiste miteinander verbunden. Das Wischblatt 54 weist eine Spoilereinheit auf, welche das Wischblatt 54 in der Betriebsstellung und in einem Betriebszustand auf die zu wischende Scheibe drückt. Das Wischblatt 54 bildet ein Flachwischblatt aus.

Die Wischervorrichtung 10 weist einen Wischarmadapter 18 auf. Der Wischarmadapter 18 weist ein Wischarmadapterelement 40 auf. Das Wischarmadapterelement 40 weist ein U-förmiges Profil auf. Das Wischarmadapterelement 40 weist zwei Seitenflansche 42, 44 auf, die deckseitig mit einem flächigen Steg 46 verbunden sind. Die Seitenflansche 42, 44 verlaufen im Wesentlichen parallel zueinander. Der Steg 46 verläuft im Wesentlichen senkrecht zu den Seitenflanschen 42, 44.

Der Wischarmadapter 18 weist vier Ausnehmungen 48, 50 auf. Die Ausnehmungen 48, 50 sind an dem Wischarmadapterelement 40 angeordnet. Jeweils zwei der Ausnehmungen 48, 50 sind an einem der Seitenflansche 42, 44 angeordnet. Die Ausnehmungen 48, 50 durchdringen die Seitenflansche 42, 44 im Wesentlichen, insbesondere vollständig. Die Ausnehmungen 48, 50 öffnen die Seitenflansche 42, 44 in eine wischblattadapterzugewandte Richtung.

Der Wischarmadapter 12 weist ein Sicherungselement 52 auf. Das Sicherungselement 52 ist in dem montierten Zustand verschiebbar am Wischarmadapterelement 40 gelagert. In dem montierten Zustand ist Sicherungselement 52 an dem Wischarmadapterelement 40 linear verschiebbar gelagert. Das Sicherungselement 52 weist ein U-förmiges Profil auf. In dem montierten Zustand umgreift das Sicherungselement 52 das Wischarmadapterelement 40 teilweise. Das Sicherungselement 52 überdeckt die Seitenflansche 42, 44 des Wischarmadapterelements 40 und den Steg 46 des Wischarmadapterelements 40 in dem montierten Zustand teilweise.

Die Wischervorrichtung 10 weist einen Wischblattadapter 12 auf. Der Wischblattadapter 12 ist speziell für die Wischervorrichtung 10 ausgebildet. Der Wischblattadapter 12 ist zu einer lösbaren Kopplung mit dem Wischarmadapter 18 vorgesehen. Der Wischblattadapter 12 ist in dem montierten Zustand unverlierbar mit dem Wischblatt 54 verbunden.

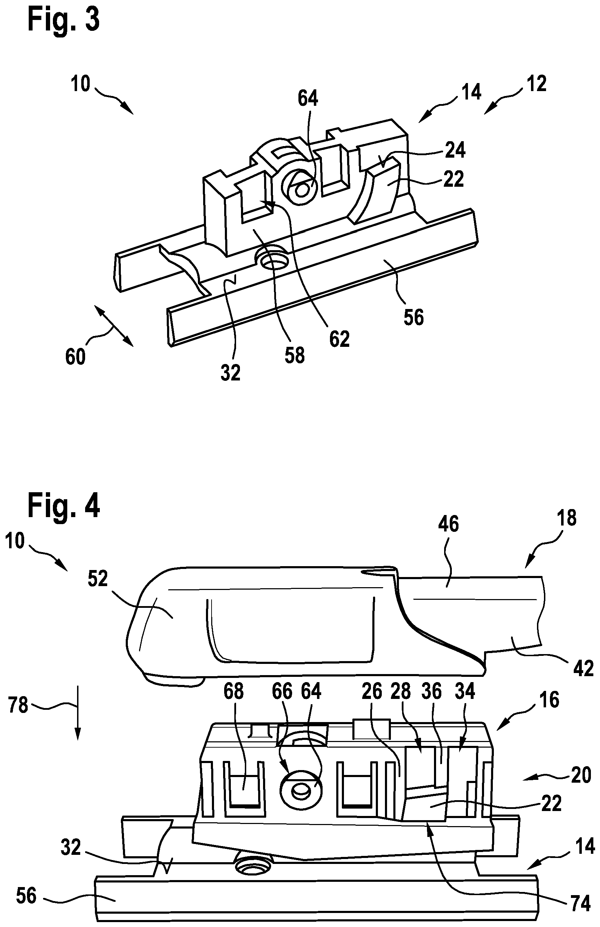

Der Wischblattadapter 12 weist ein erstes Wischblattadapterelement 14 auf (vgl. Fig. 3). Das erste Wischblattadapterelement 14 ist einstückig ausgebildet. Das erste Wischblattadapterelement 14 weist einen Grundkörper 56 auf. Der Grundkörper 56 ist in dem montierten Zustand fest mit dem Wischblatt 54 verbunden, beispielsweise durch eine Schweißverbindung, insbesondere eine Ultraschallschweißverbindung, oder auch durch eine Rastverbindung. Das erste Wischblattadapterelement 14 weist eine Grundfläche 32 auf.

Der Grundkörper 56 weist eine senkrecht zu einer Wischrichtung 60 verlaufende Haltewandung 58 auf. Die Wischrichtung 60 verläuft im Wesentlichen senkrecht zu einer Haupterstreckungsrichtung des Wischarmadapters 18. Die Wischrichtung 60 verläuft im Wesentlichen parallel zu einer zu wischenden Scheibe.

Die Haltewandung 58 erstreckt sich im Wesentlichen senkrecht zu der Grundfläche 32 und ragt insbesondere über die Grundfläche 32 hinaus. In der Haltewandung 58 sind vier Ausnehmungen 62 angeordnet. Von mehrfach vorhandenen Objekten ist in den Figuren jeweils lediglich eines mit einem Bezugszeichen versehen. Die Ausnehmungen 62 dringen teilweise in die Haltewandung 58 ein.

Das erste Wischblattadapterelement 14 weist einen Lagerbolzen 64 auf. Der Lagerbolzen 64 ist am Grundkörper 56 angeordnet. Der Lagerbolzen 64 ist einstückig mit dem Grundkörper 56 ausgebildet. Der Lagerbolzen 64 ist im Wesentlichen zylinderförmig ausgebildet. Eine Zylinderachse des Lagerbolzens 64 verläuft im Wesentlichen parallel zu der Wischrichtung 60.

Der Wischblattadapter 12 weist ein zweites Wischblattadapterelement 16 auf (vgl. Fig. 2). Das zweite Wischblattadapterelement 16 ist einstückig ausgebildet. In dem montierten Zustand umgreift das zweite Wischblattadapterelement 16 das erste Wischblattadapterelement 14 teilweise. Das zweite Wischblattadapterelement 16 weist ein im Wesentlichen U-förmiges Profil auf.

In dem montierten Zustand ist das zweite Wischblattadapterelement 16 schwenkbar relativ zu dem ersten Wischblattadapterelement 14 gelagert. Das zweite Wischblattadapterelement 16 ist in dem montierten Zustand schwenkbar um die Zylinderachse des Lagerbolzens 64 gelagert. Das zweite Wischblattadapterelement 16 weist zwei Ausnehmungen 66 auf. In dem montierten Zustand greift der Lagerbolzen 64 des ersten Wischblattadapterelements 14 teilweise durch die Ausnehmungen 66 des zweiten Wischblattadapterelements 16 hindurch (vgl. Fig. 1).

Das zweite Wischblattadapterelement 16 ist dazu vorgesehen, bei einer Montage in das Wischarmadapterelement 40 eingeschoben zu werden. Der Wischarmadapter 18 ist in dem montierten Zustand mit dem zweiten Wischblattadapterelement 16 gekoppelt.

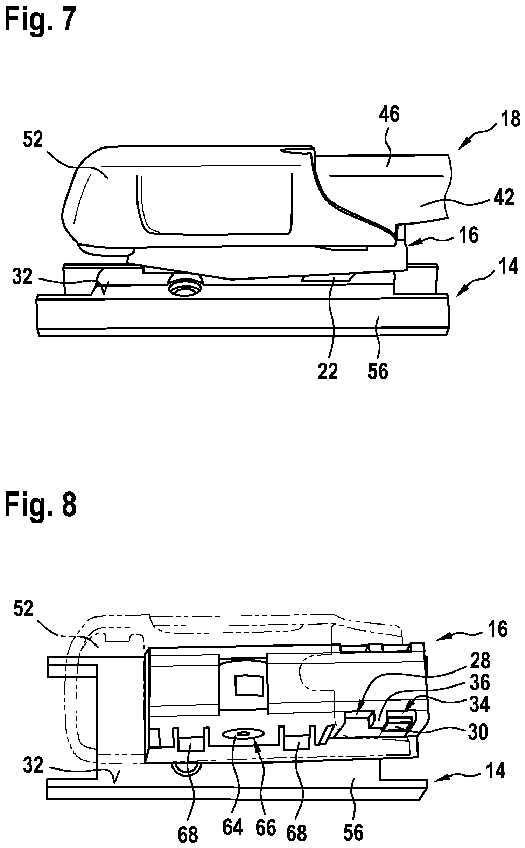

Der Wischblattadapter 12 und der Wischarmadapter 18 sind im Wesentlichen symmetrisch bezüglich einer Symmetrieebene ausgebildet (vgl. Fig. 8), weshalb im Folgenden lediglich eine Seite der Symmetrieebene beschrieben wird. Die Symmetrieebene ist im Wesentlichen senkrecht zu der Grundfläche 32 des ersten Wischblattadapterelements 14 ausgerichtet. Alternativ zu einer symmetrischen Ausgestaltung des Wischblattadapters und des Wischarmadapter könnten die beschriebenen Objekte ausschließlich auf einer Seite des Wischblattadapters und/oder des Wischarmadapter angeordnet sein.

Das zweite Wischblattadapterelement 16 weist zwei Rastmittel 68 auf. Die Rastmittel 68 sind dazu vorgesehen, bei der Montage mit dem Sicherungselement 52 des Wischarmadapters 18 verrastet zu werden. Die Rastmittel 68 sind aus einer Ausgangsposition heraus federelastisch auslenkbar ausgebildet. Die Rastmittel 68 bilden jeweils eine Rastzunge aus. Die Rastmittel 68 sind in Wischrichtung 60 elastisch auslenkbar ausgebildet. In dem montierten Zustand greifen die Rastmittel 68 teilweise in die Ausnehmungen 48, 50 des Wischarmadapterelements 40 ein.

Zu einer Montage des Wischarmadapters 18 an dem Wischblattadapter 12 wird der Wischarmadapters 18 oberhalb des Wischblattadapters 12 angeordnet (vgl. Fig. 4). Der Wischarmadapter 18 wird dem Wischblattadapter 12 in einer Montagerichtung 78 angenähert (vgl. Fig. 4 bis 7). Die Montagerichtung 78 ist in der Betriebsstellung im Wesentlichen senkrecht zu der zu wischenden Scheibe ausgerichtet. Die Montagerichtung 78 ist in der Betriebsstellung im Wesentlichen senkrecht zu der Grundfläche 32 des ersten Wischblattadapterelements 14 ausgerichtet.

Die Wischervorrichtung 10 weist eine Montagekulissenführung 34 auf. Die Montagekulissenführung 34 ist teilweise von dem zweiten Wischblattadapterelement 16 gebildet. Bei der Montage des Wischarmadapters 18 an dem Wischblattadapter 12 ist die Montagekulissenführung 34 abschnittsweise zu einer Führung eines Anschlagelements 30 des Wischarmadapters 18 vorgesehen.

Der Wischarmadapter 18 weist das Anschlagelement 30 auf. Das Anschlagelement 30 ist an dem Sicherungselement 52 angeordnet. Das Anschlagelement 30 ist in einem dem Wischarmadapterelement 40 zugewandten Bereich des Sicherungselements 52 angeordnet. Bei der Montage des Wischarmadapters 18 an dem Wischblattadapter 12 gleitet das Anschlagelement 30 in der Montagerichtung 78 in der Montagekulissenführung 34.

Der Wischarmadapter 18 weist ein weiteres Anschlagelement 70 auf. Das weitere Anschlagelement 70 ist an dem Sicherungselement 52 angeordnet. Das weitere Anschlagelement 70 ist in einem dem Wischarmadapterelement 40 abgewandten Bereich des Sicherungselements 52 angeordnet. Bei der Montage des Wischarmadapters 18 an dem Wischblattadapter 12 gleitet das weitere Anschlagelement 70 in der Montagerichtung 78 entlang einer vorderen Wandung des zweiten Wischblattadapterelements 16. Die vordere Wandung des zweiten Wischblattadapterelements 16 ist bezüglich einer Haupterstreckungsrichtung des zweiten Wischblattadapterelements 16 dem Wischarmadapterelement 40 abgewandt angeordnet.

Bei der Montage des Wischarmadapters 18 an dem Wischblattadapter 12 wird der Wischarmadapter 18 dem Wischblattadapter 12 so lange angenähert, bis die Rastmittel 68 in die Ausnehmungen 48, 50 des Wischarmadapters 18 eingreifen (vgl. Fig. 7). In dem montierten Zustand sind der Wischarmadapter 18 und das zweite Wischblattadapterelement 16 miteinander verrastet.

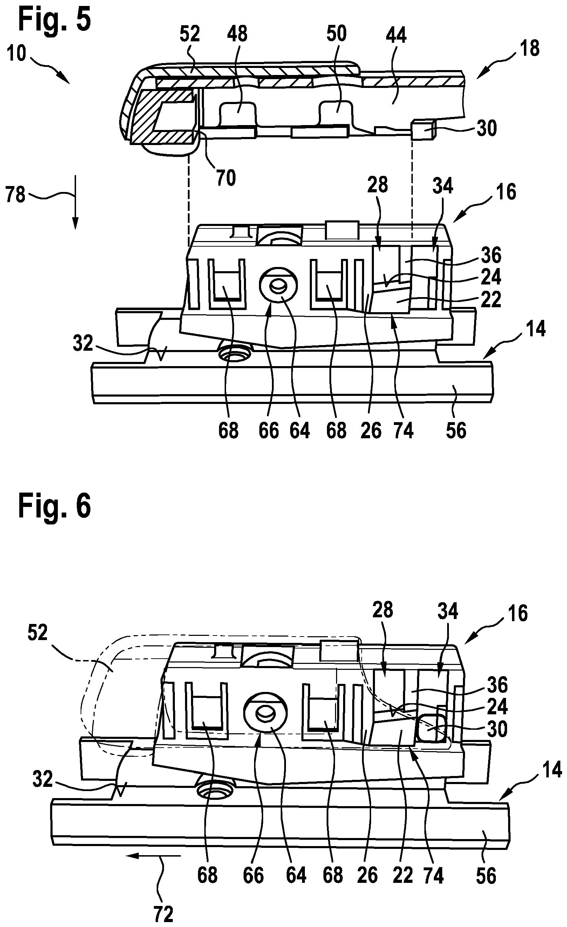

Das Anschlagelement 30 ist in dem montierten Zustand und in der Betriebsstellung an einem der Grundfläche 32 des ersten Wischblattadapterelements 14 zugewandten Ende der Montagekulissenführung 34 angeordnet (vgl. Fig. 6). In der Betriebsstellung verhindert eine seitliche Begrenzung der Montagekulissenführung 34 eine Bewegung des Wischarmadapters 18 relativ zu dem zweiten Wischblattadapterelement 16 in einer Richtung 72 und damit eine Demontage des Wischarmadapters 18 in der Richtung 72 von dem Wischblattadapter 12.

Das erste Wischblattadapterelement 14 weist ein Blockierungselement 22 auf. Das Blockierungselement 22 bildet die Montagekulissenführung 34 teilweise aus. Die Montagekulissenführung 34 ist teilweise von dem ersten Wischblattadapterelement 14 gebildet. Das Blockierungselement 22 bildet die seitliche Begrenzung der Montagekulissenführung 34. Bei der Montage des Wischarmadapters 18 an dem Wischblattadapter 12 ist das Blockierungselement 22 abschnittsweise zu einer Führung des Anschlagelements 30 des Wischarmadapters 18 vorgesehen.

In der Betriebsstellung des Wischarmadapters 18 relativ zu dem ersten Wischblattadapterelement 14 blockiert das Blockierungselement 22 eine Demontage des Wischarmadapters 18 von dem Wischblattadapter 12 in der Richtung 72. Die Richtung 72 ist im Wesentlichen parallel zu der zu wischenden Scheibe ausgerichtet. Die Richtung 72 ist als Horizontalrichtung ausgebildet.

In dem montierten Zustand und in der Betriebsstellung greift das Blockierungselement 22 teilweise durch das zweite Wischblattadapterelement 16 hindurch. Das zweite Wischblattadapterelement 16 weist eine Ausnehmung 74 auf, durch welche das Blockierungselement 22 in dem montierten Zustand und in der Betriebsstellung teilweise hindurchgreift.

Das zweite Wischblattadapterelement 16 weist ein Kulissenführungsbegrenzungselement 36 auf. Das Kulissenführungsbegrenzungselement 36 bildet die seitliche Begrenzung der Montagekulissenführung 34. In der Betriebsstellung sind das Kulissenführungsbegrenzungselement 36 und das Blockierungselement 22 im Wesentlichen bündig angeordnet.

In dem montierten Zustand sind der Wischarmadapter 18 und das zweite Wischblattadapterelement 16 drehfest miteinander verbunden. Der Wischarmadapter 18 ist relativ zu dem ersten Wischblattadapterelement 14 schwenkbar gelagert.

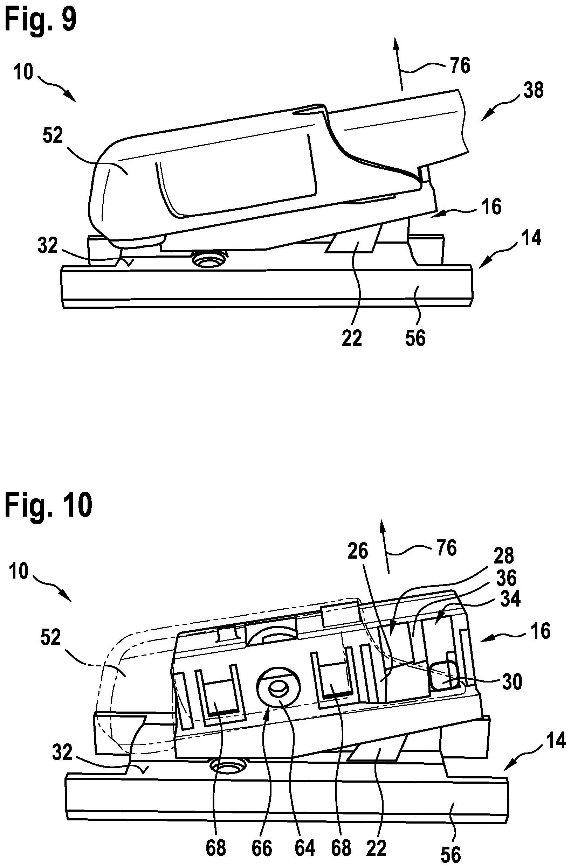

Der Wischblattadapter 12 weist eine Sicherungseinheit 20 auf. Die Sicherungseinheit 20 lässt eine Demontage des Wischarmadapters 18 von dem Wischblattadapter 12 ausschließlich in einer Demontageschwenkstellung des Wischarmadapters 18 relativ zu dem ersten Wischblattadapterelement 14 zu (vgl. Fig. 9). Die Sicherungseinheit 20 ist teilweise durch das Blockierungselement 22 gebildet.

In einem Verfahren zu einer Demontage der Wischervorrichtung 10 wird eine Demontage des Wischarmadapters 18 von dem Wischblattadapter 12 ausschließlich in der Demontageschwenkstellung des Wischarmadapters 18 relativ zu dem ersten Wischblattadapterelement 14 zugelassen.

Der Wischarmadapter 18 ist in der Demontageschwenkstellung schräg relativ zu der Grundfläche 32 angeordnet. Im vorliegenden Ausführungsbeispiel nimmt der Wischarmadapter 18 in der Demontageschwenkstellung einen minimalen Winkel von im Wesentlichen 10° relativ zu der Grundfläche 32 des ersten Wischblattadapterelements 14 an.

In der Demontageschwenkstellung ist der Wischarmadapter 18 in einer Demontageposition relativ zu dem zweiten Wischblattadapterelement 16 angeordnet. Ausgehend von der Demontageposition ist der Wischarmadapter 18 abschnittsweise beweglich relativ zu dem zweiten Wischblattadapterelement 16 angeordnet.

Das Blockierungselement 22 weist eine Führungsfläche 24 auf. Ausgehend von der Demontageposition gleitet der Wischarmadapter 18 bei einer Bewegung des Wischarmadapters 18 relativ zu dem zweiten Wischblattadapterelement 16 entlang der Führungsfläche 24 (vgl. Fig. 9 bis 12). Bei der Bewegung des Wischarmadapters 18 relativ zu dem zweiten Wischblattadapterelement 16 ist das Blockierungselement 22 abschnittsweise zu einer Führung des Anschlagelements 30 des Wischarmadapters 18 vorgesehen.

Die Führungsfläche 24 ist in der Demontageschwenkstellung zu einer Führung des Wischarmadapters 18 relativ zu dem zweiten Wischblattadapterelement 16 vorgesehen. In der Demontageschwenkstellung lässt das Blockierungselement 22 eine Bewegung des Wischarmadapters 18 relativ zu dem zweiten Wischblattadapterelement 16 zu.

Im vorliegenden Ausführungsbeispiel ist der Wischarmadapter 18 in der Demontageschwenkstellung ausgehend von der Demontageposition um eine Strecke von im Wesentlichen 6 mm beweglich relativ zu dem zweiten Wischblattadapterelement 16 angeordnet.

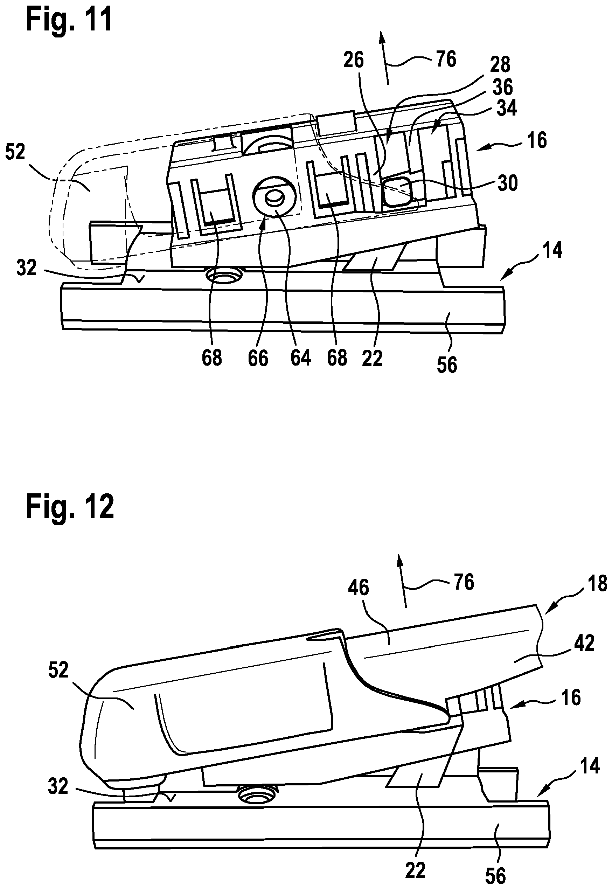

Das zweite Wischblattadapterelement 16 weist ein Begrenzungselement 26 auf. Das Begrenzungselement 26 begrenzt eine in der Demontageschwenkstellung erfolgende Bewegung des Wischarmadapters 18 relativ zu dem zweiten Wischblattadapterelement 16 (vgl. Fig. 11). Das Begrenzungselement 26 bildet eine Anschlagfläche für das Anschlagelement 30. In einer weiteren Demontageposition des Wischarmadapters 18 relativ zu dem zweiten Wischblattadapterelement 16 ist der Wischarmadapter 18 in Kontakt mit der Führungsfläche 24 und mit dem Begrenzungselement 26 angeordnet.

Ausgehend von der weiteren Demontageposition blockiert das Blockierungselement 22 eine Schwenkbewegung des Wischarmadapters 18 von der Demontageschwenkstellung in die Betriebsstellung.

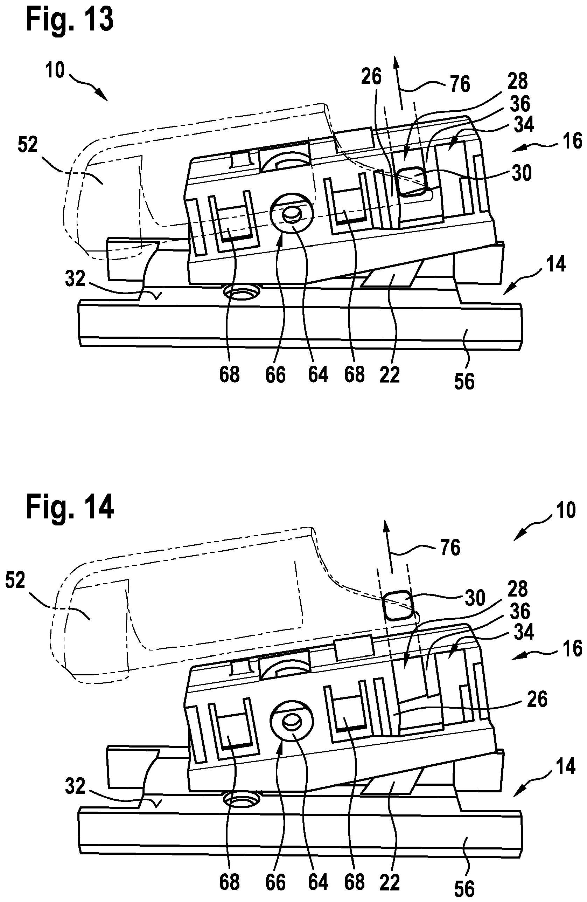

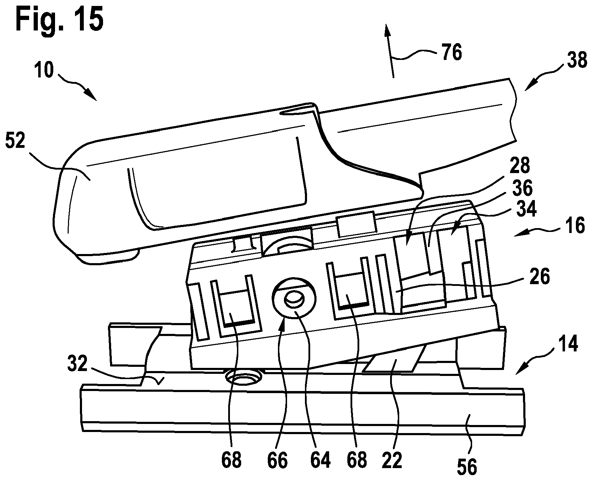

Ausgehend von der weiteren Demontageposition ist der Wischarmadapter 18 in einer Demontagerichtung 76 beweglich angeordnet (vgl. Fig. 12 bis 15). Die Demontagerichtung 76 ist im Wesentlichen senkrecht zu der Führungsfläche 24 ausgerichtet. Das zweite Wischblattadapterelement 16 weist eine Demontagekulissenführung 28 auf, welche in der Demontageschwenkstellung abschnittsweise zu einer Führung des Anschlagelements 30 des Wischarmadapters 18 vorgesehen ist. Die Demontagekulissenführung 28 führt das Anschlagelement 30 bei einer Bewegung in der Demontagerichtung 76.

Die Demontagekulissenführung 28 ist teilweise durch das Kulissenführungsbegrenzungselement 36 begrenzt. Das Kulissenführungsbegrenzungselement 36 begrenzt die Montagekulissenführung 34 und die Demontagekulissenführung 28 teilweise.

## Patentansprüche

1. Wischervorrichtung mit einem Wischblattadapter (12), welcher zumindest ein erstes Wischblattadapterelement (14) und zumindest ein zweites Wischblattadapterelement (16) aufweist, welches in wenigstens einem montierten Zustand schwenkbar relativ zu dem ersten Wischblattadapterelement (14) gelagert ist, und mit einem Wischarmadapter (18), welcher in dem montierten Zustand mit dem zweiten Wischblattadapterelement (16) gekoppelt ist, wobei der Wischblattadapter (12) eine Sicherungseinheit (20) aufweist, welche dazu vorgesehen ist, eine Demontage des Wischarmadapters (18) von dem Wischblattadapter (12) ausschließlich in zumindest einer Demontageschwenkstellung des Wischarmadapters (18) relativ zu dem ersten Wischblattadapterelement (14) zuzulassen, **dadurch gekennzeichnet, dass** das erste Wischblattadapterelement (14) zumindest ein Blockierungselement (22) aufweist, welches in dem montierten Zustand wenigstens teilweise durch das zweite Wischblattadapterelement (16) hindurchgreift und welches dazu vorgesehen ist, in wenigstens einer Betriebsstellung des Wischarmadapters (18) relativ zu dem ersten Wischblattadapterelement (14) eine Demontage des Wischarmadapters (18) von dem Wischblattadapter (12) zumindest in einer Richtung (72) zu blockieren.

2. Wischervorrichtung nach Anspruch 1, **dadurch gekennzeichnet, dass** der Wischarmadapter (18) in der Demontageschwenkstellung in einer Demontageposition relativ zu dem zweiten Wischblattadapterelement (16) und ausgehend von der Demontageposition wenigstens abschnittsweise beweglich relativ zu dem zweiten Wischblattadapterelement (16) angeordnet ist.

3. Wischervorrichtung nach Anspruch 2, **dadurch gekennzeichnet, dass** das Blockierungselement (22) zumindest eine Führungsfläche (24) aufweist, welche in der Demontageschwenkstellung zu einer Führung des Wischarmadapters (18) relativ zu dem zweiten Wischblattadapterelement (16) vorgesehen ist.

4. Wischervorrichtung nach Anspruch 3, **dadurch gekennzeichnet, dass** das zweite Wischblattadapterelement (16) zumindest ein Begrenzungselement (26) aufweist, welches dazu vorgesehen ist, eine in der Demontageschwenkstellung erfolgende Bewegung des Wischarmadapters (18) relativ zu dem zweiten Wischblattadapterelement (16) zu begrenzen.

5. Wischervorrichtung nach einem der vorhergehenden Ansprüche, **dadurch gekennzeichnet, dass** das zweite Wischblattadapterelement (16) zumindest eine Demontagekulissenführung (28) aufweist, welche in der Demontageschwenkstellung wenigstens abschnittsweise zu einer Führung zumindest eines Anschlagelements (30) des Wischarmadapters (18) vorgesehen ist.

6. Wischervorrichtung nach einem der vorhergehenden Ansprüche, **dadurch gekennzeichnet, dass** der Wischarmadapter (18) in der Demontageschwenkstellung einen minimalen Winkel von mindestens 5° relativ zu einer Grundfläche (32) des ersten Wischblattadapterelements (14) annimmt.

7. Wischervorrichtung nach einem der vorhergehenden Ansprüche, **gekennzeichnet durch** zumindest eine Montagekulissenführung (34), welche wenigstens teilweise von dem zweiten Wischblattadapterelement (16) gebildet ist und welche wenigstens abschnittsweise zu einer Führung zumindest eines Anschlagelements (30) des Wischarmadapters (18) vorgesehen ist.

8. Wischervorrichtung zumindest nach Anspruch 1, **dadurch gekennzeichnet, dass** das Blockierungselement (22) wenigstens abschnittsweise zu einer Führung zumindest eines Anschlagelements (30) des Wischarmadapters (18) vorgesehen ist.

9. Wischervorrichtung zumindest nach Anspruch 5 und 7, **dadurch gekennzeichnet, dass** das zweite Wischblattadapterelement (16) zumindest ein Kulissenführungsbegrenzungselement (36) aufweist, welches dazu vorgesehen ist, die Montagekulissenführung (34) und die Demontagekulissenführung (28) wenigstens teilweise zu begrenzen.

10. Wischer mit zumindest einer Wischervorrichtung (10) nach einem der vorhergehenden Ansprüche.

11. Verfahren zu einer Demontage einer Wischervorrichtung (10), nach einem der Ansprüche 1 bis 10, mit einem Wischblattadapter (12), welcher zumindest ein erstes Wischblattadapterelement (14) und zumindest ein zweites Wischblattadapterelement (16) aufweist, welches in wenigstens einem montierten Zustand schwenkbar relativ zu dem ersten Wischblattadapterelement (14) gelagert ist, und mit einem Wischarmadapter (18), welcher in dem montierten Zustand mit dem zweiten Wischblattadapterelement (16) gekoppelt ist, wobei eine Demontage des Wischarmadapters (18) von dem Wischblattadapter (12) ausschließlich in zumindest einer Demontageschwenkstellung des Wischarmadapters (18) relativ zu dem ersten Wischblattadapterelement (14) zugelassen wird.

## Claims

1. Wiper device comprising a wiper blade adapter (12) which has at least one first wiper blade adapter element (14) and at least one second wiper blade adapter element (16), which, in at least one mounted state, is mounted so as to be pivotable relative to the first wiper blade adapter element (14), and comprising a wiper arm adapter (18) which, in the mounted state, is coupled to the second wiper blade adapter element (16), wherein the wiper blade adapter (12) has a securing unit (20) which is provided to permit removal of the wiper arm adapter (18) from the wiper blade adapter (12) exclusively in at least one removal pivoted position of the wiper arm adapter (18) relative to the first wiper blade adapter element (14), **characterized in that** the first wiper blade adapter element (14) has at least one blocking element (22) which, in the mounted state, at least partially reaches through the second wiper blade adapter element (16) and which is provided to block removal of the wiper arm adapter (18) from the wiper blade adapter (12) at least in one direction (72) in at least one operating position of the wiper arm adapter (18) relative to the first wiper blade adapter element (14).

2. Wiper device according to Claim 1, **characterized in that**, in the removal pivoted position, the wiper arm adapter (18) is arranged in a removal position relative to the second wiper blade adapter element (16) and, starting from the removal position, so as to be movable at least in sections relative to the second wiper blade adapter element (16).

3. Wiper device according to Claim 2, **characterized in that** the blocking element (22) has at least one guide surface (24) which, in the removal pivoted position, is provided for guiding the wiper arm adapter (18) relative to the second wiper blade adapter element (16).

4. Wiper device according to Claim 3, **characterized in that** the second wiper blade adapter element (16) has at least one limiting element (26) which is provided to limit a movement of the wiper arm adapter (18), which takes place in the removal pivoted position, relative to the second wiper blade adapter element (16).

5. Wiper device according to one of the preceding claims, **characterized in that** the second wiper blade adapter element (16) has at least one removal slotted guide mechanism (28) which, in the removal pivoted position, is provided at least in sections for guiding at least one stop element (30) of the wiper arm adapter (18).

6. Wiper device according to one of the preceding claims, **characterized in that**, in the removal pivoted position, the wiper arm adapter (18) adopts a minimum angle of at least 5° relative to a base area (32) of the first wiper blade adapter element (14) .

7. Wiper device according to one of the preceding claims, **characterized by** at least one mounting slotted guide mechanism (34) which is at least partially formed by the second wiper blade adapter element (16) and which is provided at least in sections for guiding at least one stop element (30) of the wiper arm adapter (18).

8. Wiper device at least according to Claim 1, **characterized in that** the blocking element (22) is provided at least in sections for guiding at least one stop element (30) of the wiper arm adapter (18).

9. Wiper device at least according to Claims 5 and 7, **characterized in that** the second wiper blade adapter element (16) has at least one slotted guide mechanism limiting element (36) which is provided to at least partially limit the mounting slotted guide mechanism (34) and the removal slotted guide mechanism (28).

10. Wiper comprising at least one wiper device (10) according to one of the preceding claims.

11. Method for removing a wiper device (10) according to one of Claims 1 to 10, comprising a wiper blade adapter (12) which has at least one first wiper blade adapter element (14) and at least one second wiper blade adapter element (16), which, in at least one mounted state, is mounted so as to be pivotable relative to the first wiper blade adapter element (14), and comprising a wiper arm adapter (18) which, in the mounted state, is coupled to the second wiper blade adapter element (16), wherein removal of the wiper arm adapter (18) from the wiper blade adapter (12) is permitted exclusively in at least one removal pivoted position of the wiper arm adapter (18) relative to the first wiper blade adapter element (14).

## Revendications

1. Dispositif d'essuie-glace comprenant un adaptateur de balai d'essuie-glace (12) qui présente au moins un premier élément d'adaptateur de balai d'essuie-glace (14) et au moins un deuxième élément d'adaptateur de balai d'essuie-glace (16) qui est supporté, dans au moins un état monté, de manière à pouvoir pivoter par rapport au premier élément d'adaptateur de balai d'essuie-glace (14), et comprenant un adaptateur de bras d'essuie-glace (18) qui, dans l'état monté, est accouplé au deuxième élément d'adaptateur de balai d'essuie-glace (16), l'adaptateur de balai d'essuie-glace (12) présentant une unité de fixation (20) qui est prévue pour permettre un démontage de l'adaptateur de bras d'essuie-glace (18) de l'adaptateur de balai d'essuie-glace (12) exclusivement dans au moins une position de pivotement de démontage de l'adaptateur de bras d'essuie-glace (18) par rapport au premier élément d'adaptateur de balai d'essuie-glace (14), **caractérisé en ce que** le premier élément d'adaptateur de balai d'essuie-glace (14) présente au moins un élément de blocage (22) qui, dans l'état monté, vient en prise au moins en partie à travers le deuxième élément d'adaptateur de balai d'essuie-glace (16) et qui est prévu pour bloquer, au moins dans une direction (72), dans au moins une position de fonctionnement de l'adaptateur de bras d'essuie-glace (18) par rapport au premier élément d'adaptateur de balai d'essuie-glace (14), un démontage de l'adaptateur de bras d'essuie-glace (18) de l'adaptateur de balai d'essuie-glace (12).

2. Dispositif d'essuie-glace selon la revendication 1, **caractérisé en ce que** l'adaptateur de bras d'essuie-glace (18), dans la position de pivotement de démontage, est disposé dans une position de démontage par rapport au deuxième élément d'adaptateur de balai d'essuie-glace (16) et à partir de la position de démontage, de manière à pouvoir être déplacé au moins en partie par rapport au deuxième élément d'adaptateur de balai d'essuie-glace (16).

3. Dispositif d'essuie-glace selon la revendication 2, **caractérisé en ce que** l'élément de blocage (22) présente au moins une surface de guidage (24) qui, dans la position de pivotement de démontage, est prévue pour guider l'adaptateur de bras d'essuie-glace (18) par rapport au deuxième élément d'adaptateur de balai d'essuie-glace (16).

4. Dispositif d'essuie-glace selon la revendication 3, **caractérisé en ce que** le deuxième élément d'adaptateur de balai d'essuie-glace (16) présente au moins un élément de limitation (26) qui est prévu pour limiter un déplacement de l'adaptateur de bras d'essuie-glace (18) par rapport au deuxième élément d'adaptateur de balai d'essuie-glace (16) se produisant dans la position de pivotement de démontage.

5. Dispositif d'essuie-glace selon l'une quelconque des revendications précédentes, **caractérisé en ce que** le deuxième élément d'adaptateur de balai d'essuie-glace (16) présente au moins un guide à coulisse de démontage (28) qui est prévu, dans la position de pivotement de démontage, pour guider au moins en partie au moins un élément de butée (30) de l'adaptateur de bras d'essuie-glace (18).

6. Dispositif d'essuie-glace selon l'une quelconque des revendications précédentes, **caractérisé en ce que** l'adaptateur de bras d'essuie-glace (18) adopte, dans la position de pivotement de démontage, un angle minimal d'au moins 5° par rapport à une surface de base (32) du premier élément d'adaptateur de balai d'essuie-glace (14).

7. Dispositif d'essuie-glace selon l'une quelconque des revendications précédentes, **caractérisé par** au moins un guide à coulisse de montage (34) qui est formé au moins en partie par le deuxième élément d'adaptateur de balai d'essuie-glace (16) et qui est prévu pour guider au moins en partie au moins un élément de butée (30) de l'adaptateur de bras d'essuie-glace (18).

8. Dispositif d'essuie-glace selon au moins la revendication 1, **caractérisé en ce que** l'élément de blocage (22) est prévu pour guider au moins en partie au moins un élément de butée (30) de l'adaptateur de bras d'essuie-glace (18).

9. Dispositif d'essuie-glace au moins selon les revendications 5 et 7, **caractérisé en ce que** le deuxième élément d'adaptateur de balai d'essuie-glace (16) présente au moins un élément de limitation de guide à coulisse (36) qui est prévu pour limiter au moins en partie le guide à coulisse de montage (34) et le guide à coulisse de démontage (28).

10. Essuie-glace comprenant au moins un dispositif d'essuie-glace (10) selon l'une quelconque des revendications précédentes.

11. Procédé pour le démontage d'un dispositif d'essuie-glace (10) selon l'une quelconque des revendications 1 à 10, comprenant un adaptateur de balai d'essuie-glace (12) qui présente au moins un premier élément d'adaptateur de balai d'essuie-glace (14) et au moins un deuxième élément d'adaptateur de balai d'essuie-glace (16) qui est supporté dans au moins un état monté de manière à pouvoir pivoter par rapport au premier élément d'adaptateur de balai d'essuie-glace (14), et comprenant un adaptateur de bras d'essuie-glace (18) qui, dans l'état monté, est accouplé au deuxième élément d'adaptateur de balai d'essuie-glace (16), un démontage de l'adaptateur de bras d'essuie-glace (18) de l'adaptateur de balai d'essuie-glace (12) étant permis exclusivement dans au moins une position de pivotement de démontage de l'adaptateur de bras d'essuie-glace (18) par rapport au premier élément d'adaptateur de balai d'essuie-glace (14).
